# EUROPEAN PATENT SPECIFICATION

(11) **EP 3 882 120 B1**
(45) Date of publication and mention of the grant of the patent: **18.10.2023**
(21) Application number: 19885743.5
(22) Date of filing: 12.11.2019
(51) Int. Cl.: B62M 6/55, B62M 6/50, B62J 45/413

(54) **POWER TRANSMISSION UNIT FOR ELECTRIC BICYCLES, AND ELECTRIC BICYCLE**
KRAFTÜBERTRAGUNGSEINHEIT FÜR ELEKTROFAHRRÄDER UND ELEKTROFAHRRAD
UNITE DE TRANSMISSION D'ENERGIE POUR BICYCLETTES ELECTRIQUES, ET BICYCLETTE ELECTRIQUE

(30) Priority: 13.11.2018 JP 2018213162
(43) Date of publication of application: 22.09.2021
(73) Proprietor: Panasonic Intellectual Property Management Co., Ltd., Osaka-shi, Osaka 540-6207 (JP)
(72) Inventor: KAWAKAMI, Masafumi, Osaka 540-6207 (JP)
(74) Representative: Müller-Boré & Partner Patentanwälte PartG mbB
(86) International application number: PCT/JP2019/044359
(87) International publication number: WO 2020/100900

(56) References cited:
- WO-A1-2014/184826
- JP-A- H1 170 890
- JP-A- H11 278 359
- JP-A- 2014 231 234

## Description

### Technical Field

The present disclosure relates to a power transmission unit for electric bicycles and also relates to an electric bicycle.

### Background Art

Patent Literature 1 discloses a motor driving unit for electric assist bicycles. In this motor driving unit, human driving force, generated by pedaling, is transmitted from crank shafts via a human driving force transmission body to a resultant force body. In the resultant force body, the human driving force transmitted from the human driving force transmission body and auxiliary driving force transmitted from a motor are combined together. Then, the resultant force, combined by the resultant force body, is transmitted via a driving sprocket and a chain to a rear wheel.

This motor driving unit includes: a speed reduction mechanism provided on an auxiliary driving force transmission path that covers the motor and the resultant force body; and a rotating body provided for the speed reduction mechanism. The rotating body rotates at a larger number of revolutions than the crank shafts while interlocking with the crank shafts. The rotational state of the rotating body is detected by a rotation detector.

In the motor driving unit, the rotating body rotates at a larger number of revolutions than the crank shafts. Thus, the motor driving unit is able to detect the rotational state of the crank shafts with higher accuracy (or resolution) than when the rotation is detected by attaching the rotating body to either the crank shafts or the human driving force transmission body. According to the configuration disclosed by Patent Literature 1, however, the rotating body, of which the rotational state needs to be detected, is provided for the speed reduction mechanism, and the gear ratio of the gears in the speed reduction mechanism is defined by the designed reduction ratio of the number of revolutions of the motor, thus preventing the number of revolutions of the rotating body from being set freely. In addition, the position where the rotating body is provided is restricted to around the axis of the speed reduction mechanism.

### Citation List

### Patent Literature

Patent Literature 1: JP 2014-231234 A, which shows the features of the preamble of claim 1, is directed at a power-assisted bicycle including a single axis motor drive unit capable of detecting a rotation state of a crankshaft with high accuracy (with high resolution), and capable of maintaining detection capability of torque successfully. In JP 2014 231234 A, in a so-called single axis motor drive unit, at a speed reduction mechanism 25 provided at a transmission path for an auxiliary driving force over a motor 21 and a resultant force body 29, a rotor 11 rotated being interlocked with a crankshaft 7a at a rotational frequency larger than that of the crankshaft 7a is disposed, and a rotation detector 10 for detecting the rotation of the rotor 11 is disposed at a control unit 24. Thereby, in JP 2014 231234 A, a rotation state of the crankshaft 7a can be detected at higher accuracy (higher resolution) than the case where the rotation is detected by mounting the rotor on the crankshaft 7a or a human power transmission body 28.

### Summary of Invention

It is therefore an object of the present disclosure to provide a power transmission unit for electric bicycles and an electric bicycle with the ability to freely set the rotational state detection accuracy of the input shaft by freely setting the number of revolutions of the rotator and to increase the degree of freedom in the arrangement position of the rotator.

The present invention is defined by the features described in the independent claims. Additional embodiments are defined in the dependent claims.

### Brief Description of Drawings

FIG. 1 is a side view of an electric bicycle according to an exemplary embodiment of the present disclosure;
FIG. 2 is a cross-sectional view thereof taken along a plane that passes through an input shaft of a motor unit and a motor shaft included in the electric bicycle;
FIG. 3 is a partially enlarged view of FIG. 2;
FIGS. 4A and 4B are side views illustrating suitable positions of a rotator of the motor unit;
FIG. 5 is a cross-sectional view, corresponding to FIG. 3, of a motor unit according to a first variation;
FIG. 6 is a cross-sectional view, corresponding to FIG. 3, of a motor unit according to a second variation;
FIG. 7 is a cross-sectional view of a motor unit according to a third variation as taken along a plane that passes through the input shaft, transmission shaft, and motor shaft thereof; and FIG. 8 is an enlarged view of a principal part shown in FIG. 7.

### Description of Embodiments

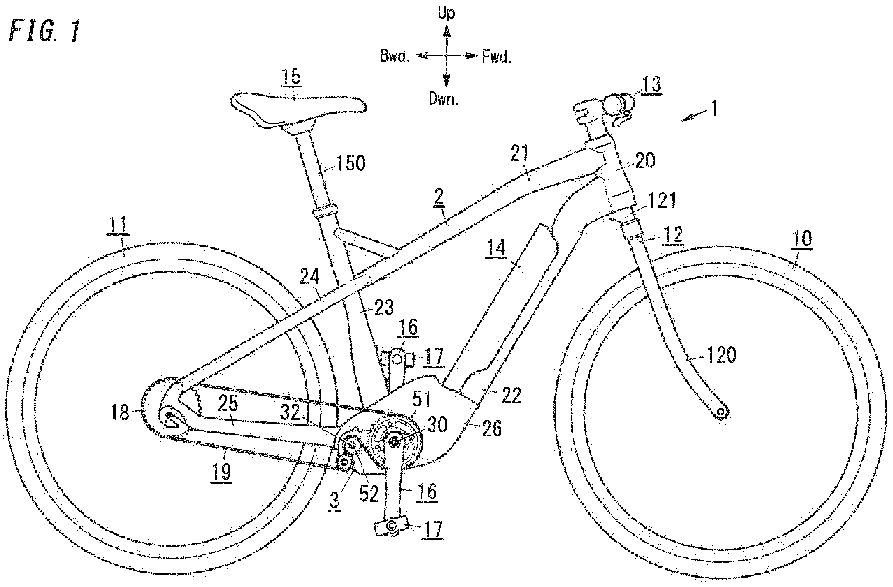

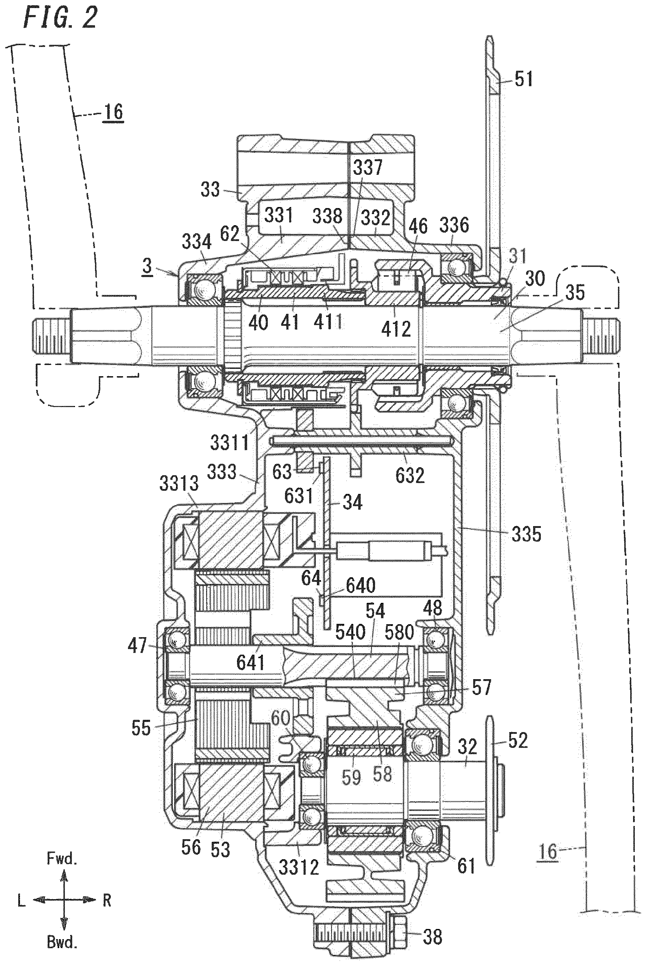

The power transmission unit for electric bicycles according to an exemplary embodiment shown in FIGS. 1 and 2 is a motor unit 3 including a motor 53. The motor unit 3 is mounted on an electric bicycle 1. The electric bicycle 1 is implemented as an electric assist bicycle. The motor unit 3 generates auxiliary driving force for the electric bicycle 1.

As used herein, the "electric assist bicycle" refers to a bicycle designed to have the motor 53 generate auxiliary driving force for the electric bicycle 1. The electric assist bicycles include not only electric assist bicycles as defined by applicable law but also other electric bicycles to be distinguished from electric assist bicycles by applicable law as well. Also, as used herein, the "auxiliary driving force" refers to additional force (i.e., assist force) to be applied to a wheel 11 of the electric bicycle 1 besides the force that the rider of the electric bicycle 1 applies by pumping pedals 17 (hereinafter referred to as "pedaling force").

As used herein, the direction in which the electric bicycle 1 travels straight (forward) when the electric bicycle 1 is used in a normal way will be hereinafter referred to as a "forward direction" and the opposite direction thereof will be hereinafter referred to as a "backward direction." Also, two directions including the forward direction and the backward direction will be hereinafter collectively referred to as "forward/backward directions" and two directions that are perpendicular to the forward/backward directions and aligned with a horizontal plane will be hereinafter referred to as "rightward/leftward directions." Furthermore, one of the rightward/leftward directions which points to the left with respect to the forward direction will be hereinafter referred to as a "leftward direction" and the other of the rightward/leftward directions which points to the right with respect to the forward direction will be hereinafter referred to as a "rightward direction."

The electric bicycle 1 according to this embodiment illustrated in FIG. 1 includes not only the motor unit 3 but also a plurality of wheels 10, 11, forks 12, handlebars 13, a frame 2, a battery 14, a saddle 15, a pair of crank arms 16, and a pair of pedals 17.

The electric bicycle 1 according to this embodiment includes, as the plurality of wheels 10, 11, a front wheel 10 and a rear wheel 11. The forks 12 include legs 120 and a steering column 121. The legs 120 support the front wheel 10 rotatably. The steering column 121 extends upward from an upper end portion of the legs 120.

The frame 2 according to this embodiment includes a head tube 20, a top tube 21, a down tube 22, a seat tube 23, seat stays 24, chain stays 25, and a bracket 26.

To the head tube 20, the steering column 121 is mounted to be rotatable with respect to the center axis of the head tube 20. The handlebars 13 are mounted on an upper end portion of the steering column 121. The rider may change the orientation of the front wheel 10 by turning the handlebars 13 to turn the steering column 121 around the center axis of the head tube 20.

A front end portion of the top tube 21 is connected to the head tube 20. A rear end portion of the top tube 21 is connected to the seat tube 23. The saddle 15 includes a shaft 150. The shaft 150 is mounted on an upper end portion of the seat tube 23. The bracket 26 is connected to a lower end portion of the seat tube 23. The down tube 22 is located under the top tube 21. A front-end portion of the down tube 22 is connected to the head tube 20. A rear end portion of the down tube 22 is connected to the bracket 26. The battery 14 is attached removably to the down tube 22. The battery 14 supplies power to the motor unit 3.

To the rear end portion of the top tube 21, respective front-end portions of the seat stays 24 are connected. The chain stays 25 are located under the seat stays 24. Respective rear end portions of the seat stays 24 are connected to their corresponding rear end portions of the chain stays 25. To the connection portion where the seat stays 24 and the chain stays 25 are connected together, the rear wheel 11 is mounted to be rotatable around a right/left axis. As used herein, "to be rotatable around the right/left axis" means being rotatable around a rotational axis that is parallel to the rightward/leftward directions. A rear sprocket 18 is fixed to the rear wheel 11. Respective front-end portions of the chain stays 25 are connected to the bracket 26.

The motor unit 3 is attached to the bracket 26. The motor unit 3 according to this embodiment is designed to transmit power to only the rear wheel 11, out of the front wheel 10 and the rear wheel 11.

The motor unit 3 includes an input structure 30. The input structure 30 is rotatable around the right/left axis. The pair of pedals 17 are coupled to the input structure 30 via the pair of crank arms 16. Transmitting the pedaling force, applied to the pedals 17, to the input structure 30 via the pair of crank arms 16 causes the input structure 30 to rotate.

The motor unit 3 according to this embodiment is a biaxial motor unit. As shown in FIG. 2, the motor unit 3 includes two output structures, namely, a first output structure 31 and a second output structure 32, as output structures for outputting the rotational power. Each of the first output structure 31 and the second output structure 32 is rotatable around the right/left axis. The first output structure 31 rotates by being supplied with the rotational power of the input structure 30 (i.e., the pedaling force). The second output structure 32 rotates to be powered by the motor 53.

The motor unit 3 according to this embodiment further includes two drive sprockets, namely, a first drive sprocket 51 and a second drive sprocket 52. The first drive sprocket 51 is fixed to the first output structure 31. The first drive sprocket 51 rotates, along with the first output structure 31, around the right/left axis. The second drive sprocket 52 is fixed to the second output structure 32. The second drive sprocket 52 rotates, along with the second output structure 32, around the right/left axis.

As shown in FIG. 1, the electric bicycle 1 according to this embodiment further includes a power transmission medium 19. The power transmission medium 19 transmits, to the rear sprocket 18, the rotational power of the first drive sprocket 51 and the rotational power of the second drive sprocket 52. In this embodiment, the power transmission medium 19 is implemented as an endless chain. The power transmission medium 19 is hung around the first drive sprocket 51, the second drive sprocket 52, and the rear sprocket 18.

The rotational power of the first output structure 31 (see FIG. 2), which is rotated by the pedaling force applied to the input structure 30, is transmitted to the rear wheel 11 via the first drive sprocket 51, the power transmission medium 19, and the rear sprocket 18. Transmitting the rotational power of the first output structure 31 to the rear wheel 11 in this manner causes the rear wheel 11 to turn in the direction in which the electric bicycle 1 travels forward.

The rotational power of the second output structure 32, which is rotated by running the motor 53, is transmitted to the rear wheel 11 via the second drive sprocket 52, the power transmission medium 19, and the rear sprocket 18 in this order. That is to say, while the rider is pumping the pedals 17 and the motor 53 is running, the rotational power of the first output structure 31 and the rotational power of the second output structure 32 are transmitted to the rear wheel 11 via the power transmission medium 19 and the rear sprocket 18. In that case, the resultant force, produced as the sum of the pedaling force applied to the input structure 30 and the auxiliary driving force of the motor 53, causes the rear wheel 11 to turn in the direction in which the electric bicycle 1 travels forward.

As shown in FIG. 2, the motor unit 3 according to this embodiment includes not only the motor 53 but also a case 33, a speed reducer mechanism 57, and a control board 34 as well. The case 33 forms the shell of the motor unit 3. The case 33 is made of a metallic material such as aluminum or stainless steel.

The case 33 houses the input structure 30, the first output structure 31, the motor 53, the speed reducer mechanism 57, the second output structure 32, and the control board 34. Note that each of the input structure 30, the first output structure 31, and the second output structure 32 is housed only partially in the case 33.

The case 33 according to this embodiment includes two members, namely, a first divided part 331 and a second divided part 332. The first divided part 331 and the second divided part 332 are arranged side by side in the rightward/leftward direction. The first divided part 331 according to this embodiment is located on the left of the second divided part 332.

The first divided part 331 is formed as a tubular member, which is open to the right (i.e., toward the second divided part 332). The first divided part 331 has a first sidewall 333 and a first peripheral wall 334, which protrudes to the right from a peripheral edge of the first sidewall 333.

The second divided part 332 is formed as a tubular member, which is open to the left (i.e., toward the first divided part 331). The second divided part 332 has a second sidewall 335 and a second peripheral wall 336, which protrudes to the left from a peripheral edge of the second sidewall 335.

The right end face of the first peripheral wall 334 constitutes a first joint surface 337. The left end face of the second peripheral wall 336 constitutes a second joint surface 338. With the first joint surface 337 and the second joint surface 338 joined together, the first divided part 331 and the second divided part 332 are fixed together with bolts 38.

At the front-end portion of the case 33, the input structure 30 and the first output structure 31 are located. The input structure 30 is caused to rotate by external force transmitted thereto. The input structure 30 according to this embodiment includes an input shaft 35 and a transmission mechanism 40. The input shaft 35 is caused to rotate by the external force transmitted thereto. The axis of the input shaft 35 according to this embodiment is parallel to the rightward/leftward direction. The input shaft 35 penetrates through the first sidewall 333 of the first divided part 331 and the second sidewall 335 of the second divided part 332. That is to say, the input shaft 35 runs through the case 33 in the rightward/leftward direction.

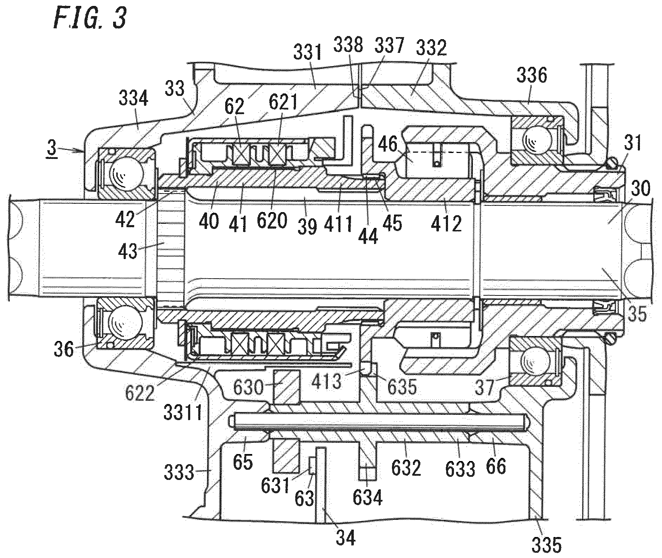

As shown in FIG. 3, the motor unit 3 according to this embodiment further includes a pair of bearings 36, 37. The pair of bearings 36, 37 supports the input shaft 35 to allow the input shaft 35 to rotate around the right/left axis. Each of the pair of bearings 36, 37 is implemented as a ball bearing. One bearing 36, out of the pair of bearings 36, 37, is attached to the first divided part 331 and arranged inside the case 33. The bearing 36 directly supports the input shaft 35 thereon.

The other bearing 37, out of the pair of bearings 36, 37, is attached to the second divided part 332 and arranged inside the case 33. The first output structure 31 according to this embodiment is provided on the outer periphery of the input shaft 35 and supports the input shaft 35 such that the input shaft 35 is rotatable around the right/left axis. Providing the first output structure 31 on the outer periphery of the input shaft 35 reduces a significant increase in the overall size of the motor unit 3. The bearing 37 supports the first output structure 31 to allow the first output structure 31 to rotate around the right/left axis. That is to say, the bearing 37 supports the input shaft 35 via the first output structure 31.

As shown in FIG. 2, the pair of crank arms 16 are respectively fixed to the right and left end portions, protruding out of the case 33, of the input shaft 35. The pedaling force applied to the pedals 17 (see FIG. 1) causes the input shaft 35 to rotate along with the pair of crank arms 16.

The transmission mechanism 40 transmits the rotational power of the input shaft 35 to the first output structure 31, thereby rotating the first output structure 31. The transmission mechanism 40 according to this embodiment includes a transmission member 41 and a one-way clutch 46. The transmission member 41 has an overall shape of a cylinder that surrounds the input shaft 35 and is provided on the outer periphery of the input shaft 35. The transmission member 41 and the first output structure 31 are arranged side by side in the rightward/leftward direction. The transmission member 41 is located on the left of the first output structure 31. The transmission member 41 is coupled to the input shaft 35 and rotates along with the input shaft 35 around the right/left axis. The transmission member 41 rotates the first output structure 31 by transmitting the rotational power of the input shaft 35 to the first output structure 31 via the one-way clutch 46. That is to say, the first output structure 31 outputs the rotational power of the transmission member 41.

As shown in FIG. 3, the transmission member 41 according to this embodiment includes two members, namely, a first member 411 and a second member 412. Each of the first member 411 and the second member 412 is formed as a tubular member, which is concentric with the input shaft 35, and is provided on the outer periphery of the input shaft 35.

Part of the first member 411 is located on the left of the first joint surface 337 and second joint surface 338 of the case 33. Specifically, the first member 411 according to this embodiment is mostly located on the left of the first joint surface 337 and second joint surface 338, and only its right end portion is located on the right of the first joint surface 337 and second joint surface 338.

The first member 411 has a fitting portion 42. The fitting portion 42 according to this embodiment is formed on an inner peripheral surface of a left end portion of the first member 411. The input shaft 35 has a fitting portion 43. The fitting portion 43 according to this embodiment is formed on the outer peripheral surface of a region, facing the fitting portion 42, of the input shaft 35. Each of the fitting portions 42, 43 according to this embodiment is a spline and the fitting portion 42 is fitted into the fitting portion 43, thus coupling the first member 411 to the input shaft 35. That is to say, in this embodiment, the fitting portions 42, 43 together form a coupling portion where the input shaft 35 and the transmission member 41 are coupled together. The first member 411 rotates along with the input shaft 35.

A gap 39 is left between a portion, located on the right of the fitting portion 42, of the first member 411 and the input shaft 35. This allows, when the motor unit 3 is assembled, the input shaft 35 to be inserted easily into the first member 411 having the cylindrical shape.

The second member 412 is arranged beside the first member 411 in the rightward/leftward direction. The second member 412 is located between the first member 411 and the first output structure 31. That is to say, the first member 411, the second member 412, and the first output structure 31 are arranged in this order along the rotational axis of the input shaft 35. The second member 412 is located on the right of the first joint surface 337 and second joint surface 338 of the case 33.

The second member 412 has a fitting portion 44. The fitting portion 44 according to this embodiment is formed on an inner peripheral surface of a left end portion of the second member 412. The first member 411 has a fitting portion 45. The fitting portion 45 according to this embodiment is formed on the outer peripheral surface of a right end portion of the first member 411. Each of the fitting portions 44, 45 according to this embodiment is a spline and the fitting portion 44 is fitted into the fitting portion 45, thus coupling the second member 412 to the first member 411 and allowing the second member 412 to rotate along with the first member 411. The second member 412 is coupled to the input shaft 35 via the first member 411.

The first output structure 31 is located, in the rightward/leftward direction, on the right of the first joint surface 337 and second joint surface 338 of the case 33. The first output structure 31 is formed in the shape of a cylinder, which is concentric with the input shaft 35, and is provided on the outer periphery of the input shaft 35.

A left end portion of the first output structure 31 is provided on the outer periphery of a right end portion of the second member 412. Between the left end portion of the first output structure 31 and the right end portion of the second member 412, the one-way clutch 46 is located. The one-way clutch 46 may be implemented as, for example, a rachet one-way clutch. The one-way clutch 46 allows the rotational power to be transmitted from the second member 412 to the first output structure 31 only when the second member 412 rotates in one direction with respect to the first output structure 31.

Specifically, if the rotational velocity of the second member 412 is higher than the rotational velocity of the first output structure 31 while the rear wheel 11 (see FIG. 1) is turning in the forward direction, the one-way clutch 46 allows the rotational power to be transmitted from the second member 412 to the first output structure 31. That is to say, while the rear wheel 11 is turning in the forward direction, the one-way clutch 46 allows the rotational power to be transmitted only from the second member 412 to the first output structure 31, not from the first output structure 31 to the second member 412. This reduces, when the rider stops pumping the pedals 17 (see FIG. 1) while the motor 53 (see FIG. 2) is running, the chances of the input shaft 35 and the crank arms 16, coupled to the input shaft 35, continuing rotating by being powered by the motor 53.

The right end portion of the first output structure 31 penetrates through the second sidewall 335 of the second divided part 332. As shown in FIG. 2, the first drive sprocket 51 is fixed onto the right end portion, protruding out of the case 33, of the first output structure 31. The pedaling force applied from the pedals 17 to the input shaft 35 via the crank arms 16 is transmitted to the first drive sprocket 51 via the first member 411, the second member 412, the one-way clutch 46, and the first output structure 31 in this order. That is to say, in this embodiment, a human driving force transmission system for transmitting, to the first drive sprocket 51, the pedaling force applied from the crank arms 16 to the motor unit 3 is formed by the input shaft 35, the transmission mechanism 40, and the first output structure 31.

At the rear of the case 33, the motor 53, the speed reducer mechanism 57, and the second output structure 32 are located. The motor 53 is housed in the first divided part 331. The motor 53 includes a motor shaft 54, a rotor 55, and a stator 56.

The axis of the motor shaft 54 is parallel to the rightward/leftward direction. The left and right end portions of the motor shaft 54 are respectively supported by a bearing 47 attached to the first divided part 331 and by a bearing 48 attached to the second divided part 332 to be rotatable around the right/left axis.

The motor shaft 54 penetrates through the rotor 55 in the rightward/leftward direction. The rotor 55 is fixed onto the motor shaft 54 and rotates, along with the motor shaft 54, around the right/left axis. The stator 56 is provided on the outer periphery of the rotor 55. The stator 56 rotates the rotor 55.

The speed reducer mechanism 57 transmits the rotational power of the motor shaft 54 to the second output structure 32 to make the rotational velocity of the second output structure 32 lower than that of the motor shaft 54 The speed reducer mechanism 57 according to this embodiment includes a gear 58 and a one-way clutch 59. The gear 58 is rotatable around the right/left axis. On the outer peripheral surface of the gear 58, provided is a tooth portion 580 with a plurality of teeth. In addition, on the outer peripheral surface of a portion, protruding to the right from the rotor 55, of the motor shaft 54, provided is a tooth portion 540 with a plurality of teeth. The tooth portion 580 and the tooth portion 540 mesh with each other. This allows the rotational power of the motor shaft 54 to be transmitted to the gear 58, thus turning the gear 58 such that the gear 58 is interlocked with the motor shaft 54. The number of teeth of the tooth portion 580 is larger than the number of teeth of the tooth portion 540.

The second output structure 32 according to this embodiment is implemented as a shaft, of which the axis is parallel to the rightward/leftward direction. The motor unit 3 according to this embodiment further includes a pair of bearings 60, 61. The pair of bearings 60, 61 supports the second output structure 32 to allow the second output structure 32 to rotate around the right/left axis. Each of the pair of bearings 60, 61 is implemented as a ball bearing.

The pair of bearings 60, 61 are located inside the case 33. One of the pair of bearings 60, 61 is attached to a bearing supporting portion 3312, which forms part of the first divided part 331. The other bearing 61 is attached to the second divided part 332. The one bearing 60 may be attached to the first divided part 331 either directly or indirectly with another member interposed between them. The other bearing 61 may be attached to the second divided part 332 either directly or indirectly with another member interposed between them.

Optionally, the bearing supporting portion 3312 may be provided separately from the first divided part 331. In that case, the bearing supporting portion 3312 is attached to the first divided part 331. The bearing supporting portion 3312 is attached to the first divided part 331 by either fitting or fixing with a fixing member such as a screw. The bearing supporting portion 3312 may be made of the same metallic material as the first divided part 331. Alternatively, the bearing supporting portion 3312 may be made of a different material from the first divided part 331. For example, if the first divided part 331 is made of a metallic material, then the bearing supporting portion 3312 may be made of a resin. This reduces the weight of the bearing supporting portion 3312, thus making the motor unit 3 more lightweight.

The first divided part 331 includes a motor case portion 3313 protruding to the left. The motor case portion 3313 covers the stator 56 and rotor 55 of the motor 53. To the motor case portion 3313, attached is a bearing 47 of the motor shaft 54. The motor case portion 3313 is in contact with the stator 56 of the motor 53. The heat generated by the stator 56 is dissipated into the outside air through the motor case portion 3313. The motor case portion 3313 is formed integrally with the first divided part 331. Optionally, the motor case portion 3313 may be provided separately from the first divided part 331. In that case, the motor case portion 3313 is attached to the first divided part 331 with a fixing member such as a screw.

The motor case portion 3313 is open to the right (i.e., toward the second divided part 332). The stator 56 of the motor 53 is arranged in the same space as the internal space of the case 33 which is formed by the first divided part 331 and the second divided part 332.

The one-way clutch 59 is provided on the outer periphery of the second output structure 32. On the outer periphery of the one-way clutch 59, the gear 58 is provided. That is to say, the one-way clutch 59 is located between the second output structure 32 and the gear 58. The one-way clutch 59 according to this embodiment is implemented as a rachet one-way clutch. The one-way clutch 59 allows the rotational power to be transmitted from the gear 58 to the second output structure 32 only when the gear 58 rotates in one direction with respect to the second output structure 32.

Specifically, if the rotational velocity of the gear 58 is higher than the rotational velocity of the second output structure 32 while the rear wheel 11 (see FIG. 1) is turning in the forward direction, the one-way clutch 59 allows the rotational power to be transmitted from the gear 58 to the second output structure 32. That is to say, while the rear wheel 11 is turning in the forward direction, the one-way clutch 59 allows the rotational power to be transmitted only from the gear 58 to the second output structure 32, not from the second output structure 32 to the gear 58. This reduces, when the motor 53 stops running and the rider pumps the pedals 17 (see FIG. 1), for example, the chances of the motor shaft 54 and the rotor 55 rotating, thus reducing the pedaling force to be applied to turn the rear wheel 11, compared to a situation where the rotational power is transmitted from the second output structure 32 to the gear 58.

The right end portion of the second output structure 32 penetrates through the second sidewall 335 of the second divided part 332. The second drive sprocket 52 is fixed onto the right end portion, protruding out of the case 33, of the second output structure 32.

When the rotational power of the gear 58 is transmitted to the second output structure 32 via the one-way clutch 59, the rotational power of the motor shaft 54 is transmitted to the second drive sprocket 52 via the gear 58, the one-way clutch 59, and the second output structure 32 in this order. This causes the second drive sprocket 52 to rotate, thus transmitting the auxiliary driving power of the motor 53 to the rear wheel 11.

When viewed perpendicularly to the rightward/leftward direction, the control board 34 overlaps at least partially with the gear 58. Optionally, the control board 34 may overlap entirely with the gear 58 when viewed perpendicularly to the rightward/leftward direction. Providing the control board 34 at such a position allows the control board 34 to be brought closer to the torque detection unit 62 along the axis of the input shaft 35, thus enabling the torque detection unit 62 and the control board 34 to be interconnected with a shorter cable.

The control board 34 according to this embodiment is implemented as a printed wiring board. The thickness of the control board 34 is parallel to the rightward/leftward direction. The control board 34 has a board surface, which is one of the two surfaces located on both sides of the thickness of the control board 34. The control board 34 may be arranged such that the board surface of the control board 34 extends in a direction intersecting with the input shaft 35. The control board 34 is located on the left of the first joint surface 337 and second joint surface 338 of the case 33. The control board 34 at least partially overlaps with the first member 411 when viewed perpendicularly to the rightward/leftward direction.

The control board 34 includes a control unit for controlling the motor 53. The control unit controls the operation of the respective elements by executing a program stored in a storage device such as a read-only memory (ROM). The battery 14 (see FIG. 1) is electrically connected to the control unit such that the control unit is powered by the battery 14. The stator 56 is electrically connected to the control unit. The control board 34 according to this embodiment includes either a switching element such as a field-effect transistor (FET) or a microcomputer.

The motor unit 3 according to this embodiment further includes the torque detection unit 62, the rotation detection unit 63, and a motor rotation detection unit 640. The torque detection unit 62 detects the torque (rotational power) of the input structure 30. The rotation detection unit 63 detects the rotational state (such as a rotational position or the rotational velocity) of the input structure 30. The motor rotation detection unit 640 detects the rotational state (such as a rotational position or the rotational velocity) of the motor 53.

Each of the torque detection unit 62, the rotation detection unit 63, and the motor rotation detection unit 640 is electrically connected to the control unit. The control unit controls the motor 53 based the information detected by the torque detection unit 62, the rotation detection unit 63, and the motor rotation detection unit 640. Specifically, on detecting, based on the torque of the first member 411 as detected by the torque detection unit 62, that a torque has been generated in the input structure 30, the control unit supplies power to the stator 56, thereby running the motor 53. In addition, based on the torque of the first member 411 detected by the torque detection unit 62 and the rotational position of the motor 53 detected by the motor rotation detection unit 640 while the motor 53 is running, the control unit controls the rotational velocity of the motor shaft 54. Furthermore, on detecting, based on the information detected by the rotation detection unit 63 (such as the rotational position of a detection target 90 to be described later), that the input structure 30 is not rotating, the control unit stops supplying electric power to the stator 56, thus stopping rotating the motor shaft 54.

As shown in FIG. 3, the torque detection unit 62 is provided on the outer periphery of the input structure 30. The torque detection unit 62 according to this embodiment is located on the right of the coupling portion where the input shaft 35 and the transmission member 41 are coupled together (i.e., on the right of the fitting portions 42, 43). Also, the torque detection unit 62 is located on the left of the second member 412 and on the left of the first joint surface 337 and second joint surface 338 of the case 33.

The torque detection unit 62 according to this embodiment is implemented as a magnetostrictive torque sensor, which includes a magnetostriction generating portion 620, a coil 621, and a coil housing 622. The magnetostriction generating portion 620 is a member imparted with magnetic anisotropy and is formed on the outer peripheral surface of the first member 411. The magnetostriction generating portion 620 may be formed spirally to define an angle of 45 degrees with respect to the rightward/leftward direction, for example. The coil 621 is arranged to be somewhat spaced from a region on the outer peripheral surface of the first member 411 where the magnetostriction generating portion 620 is provided. The coil housing 622 is provided to cover the coil 621. The coil 621 and the coil housing 622 are supported by either the case 33 or a member attached to the case 33, for example.

When the torque of the input shaft 35 is transmitted to the first member 411, the magnetostriction generating portion 620 provided for the first member 411 is strained, thus producing a portion with increased permeability and a portion with decreased permeability. Thus, the torque of the first member 411 may be detected as a piece of information representing the torque of the input shaft 35 by measuring a difference in inductance of the coil 621.

The weight of the rider could be applied as downward force from the pedals 17 to the input shaft 35 via the crank arms 16. This force would constitute disturbance when the torque of the input shaft 35 is detected. Also, unlike the second member 412, the first member 411 is not adjacent to the one-way clutch 46, thus making the vibration caused by the one-way clutch 46 hardly transmissible to the first member 411. Therefore, the torque of the input shaft 35 may be detected appropriately by detecting the torque of the first member 411 as is done in this embodiment.

The rotation detection unit 63 includes: a rotator 632 that rotates while interlocking with the input structure 30; and a detection unit 631 for detecting the rotational state (such as a rotational position or rotational velocity) of the rotator 632. The rotator 632 according to this embodiment includes a detection target 630 and the detection unit 631 detects the rotational state of the detection target 630.

The rotator 632 is rotatable around the right/left axis. The rotator 632 is arranged beside the input structure 30 in a direction perpendicular to the rightward/leftward direction. The rotational axis of the rotator 632 and the rotational axis of the input structure 30 are located at different positions in the direction perpendicular to the rightward/leftward direction. In addition, the rotator 632 is located, in a direction perpendicular to the rightward/leftward direction, at a different position from the rotational axis of the gear 58 of the speed reducer mechanism 57.

The rotator 632 according to this embodiment includes a body 633. The body 633 is a shaft extending parallel to the rightward/leftward direction. The case 33 includes a pair of supporting portions 65, 66 for supporting the body 633 such that the body 633 is rotatable around the right/left axis. One supporting portion 65, out of the pair of supporting portions 65, 66, is provided for the first divided part 331, while the other supporting portion 66 is provided for the second divided part 332.

The body 633 includes a bulge portion 634. The bulge portion 634 is provided as an intermediate portion in the rightward/leftward direction of the body 633. The bulge portion 634 is formed in the shape of a circular disk, which is larger than the rest of the body 633 when viewed in the rightward/leftward direction. The bulge portion 634 includes a tooth portion 635. The tooth portion 635 has a plurality of teeth, which are provided on the outer peripheral surface of the bulge portion 634.

The second member 412 includes a tooth portion 413. The tooth portion 413 has a plurality of teeth, which are provided on the outer peripheral surface at a left end portion of the second member 412. The tooth portion 413 rotates around the rotational axis, aligned with the rotational axis of the input shaft 35, of the second member 412. The tooth portion 413 meshes with the tooth portion 635. This allows the body 633 (rotator 632) to rotate while interlocking with the second member 412. That is to say, in this embodiment, the tooth portion 413 coupled to the second member 412 serves as a rotational member that rotates along with the input shaft 35, and the rotator 632 rotates while interlocking with the tooth portion 413. Note that the rotational member to which the rotator 632 is coupled may be a member located closer to the input end than the one-way clutch 46 is in an input transmission system formed by the input shaft 35, the transmission mechanism 40, and the first output structure 31. For example, the rotational member may be a part coupled to the first member 411 or may also be a part coupled to the input shaft 35. Alternatively, the rotational member may also be a member provided separately from the member coupled thereto (which is any of the input shaft 35, the first member 411, or the second member 412).

The number of teeth of the tooth portion 635 is smaller than the number of teeth of the tooth portion 413. This makes the rotational velocity of the rotator 632 higher than the rotational velocity of the second member 412 when the rotator 632 rotates while interlocking with the second member 412.

The detection target 630 is attached on the outer peripheral surface of a left end portion of the body 633. The detection target 630 rotates, along with the body 633, around the right/left axis. The detection target 630 according to this embodiment may be implemented as either a member, in which a plurality of magnets are embedded such that the magnetic poles alternate along the circumference thereof, or a magnet, which is magnetized such that the magnetic poles alternate along the circumference thereof.

The detection target 630 is located on the left of the control board 34 and overlaps with the torque detection unit 62 when viewed perpendicularly to the rightward/leftward direction.

The control board 34 overlaps with a coil housing 622 of the torque detection unit 62 when viewed perpendicularly to the rightward/leftward direction. Arranging the control board 34 at such a position allows the torque detection unit 62 and the control board 34 to be interconnected with a shorter cable. This advantage is achieved by only the positional relationship between the control board 34 and the torque detection unit 62, irrespective of the position of the detection target 630 according to this embodiment.

The detection unit 631 according to this embodiment is implemented as a hole integrated circuit (IC) for detecting the magnetic force of the magnets included in the detection target 630. The detection unit 631 is mounted on the left surface, which is one of two surfaces located on both sides of the thickness, of the control board 34. The detection unit 631 is arranged beside the detection target 630 in the rightward/leftward direction and faces the detection target 630. The detection unit 631 detects the rotational position of the detection target 630 by detecting a variation in magnetic field, which is involved with the rotation of the detection target 630.

As shown in FIG. 2, the motor unit 3 according to this embodiment further includes a motor detection unit 64 including a motor rotation detection unit 640. The motor detection unit 64 further includes a rotator 641 in addition to the motor rotation detection unit 640.

The rotator 641 is attached to the outer peripheral surface of the motor shaft 54 and rotates along with the motor shaft 54 around the right/left axis. The rotator 641 is located between the rotor 55 and the gear 58. The rotator 641 is located on the left of the control board 34 and overlaps with the torque detection unit 62 when viewed perpendicularly to the rightward/leftward direction. The rotator 641 may be implemented as either a member, in which a plurality of magnets are embedded such that the magnetic poles alternate along the circumference thereof, or a magnet, which is magnetized such that the magnetic poles alternate along the circumference thereof.

The motor rotation detection unit 640 according to this embodiment is implemented as a hole integrated circuit (IC) for detecting the magnetic force of the magnets included in the rotator 641. The motor rotation detection unit 640 is mounted on the left surface of the control board 34. Alternatively, the motor rotation detection unit 640 may be mounted on the right surface of the control board 34.

In this embodiment, the motor rotation detection unit 640 and the detection unit 631 of the rotation detection unit 63 are mounted on the same control board 34. This eliminates the need to separately provide cables for connecting the motor rotation detection unit 640 and the rotation detection unit 63 to the control board 34, thus reducing the number of members to be arranged in the case 33 and also reducing a significant increase in the overall size of the motor unit 3. In addition, in this embodiment, the motor rotation detection unit 640 and the detection unit 631 of the rotation detection unit 63 are mounted on the same surface of the control board 34. This facilitates mounting the detection unit 631 of the rotation detection unit 63 and the motor rotation detection unit 640 onto the control board 34.

The motor rotation detection unit 640 is arranged beside the rotator 641 in the rightward/leftward direction and faces the rotator 641. The motor rotation detection unit 640 detects the rotational position of the rotator 641 by detecting a variation in magnetic field, which is involved with the rotation of the rotator 641.

When the motor unit 3 is assembled, for example, the members to be arranged in the case 33 are incorporated from the left (i.e., from the second joint surface 338) into the second divided part 332, and then the first joint surface 337 of the first divided part 331 and the second joint surface 338 of the second divided part 332 are joined together. In this embodiment, the detection target 630 of the rotation detection unit 63 overlaps with the torque detection unit 62 when viewed perpendicularly to the rightward/leftward direction (i.e., a direction aligned with the input shaft 35) as shown in FIG. 3. This allows the detection target 630 and the detection unit 631 for detecting a variation in magnetic field thereof to be arranged, as well as the torque detection unit 62, on the left beside the first divided part 331. This facilitates, when the motor unit 3 is assembled, incorporating the torque detection unit 62, the detection target 630, and the detection unit 631 into the second divided part 332.

As shown in FIG. 2, in this embodiment, the rotator 641 of the motor detection unit 64 also overlaps with the torque detection unit 62 when viewed perpendicularly to the rightward/leftward direction. In addition, in this embodiment, the detection target 630 of the rotation detection unit 63 and the rotator 641 of the motor detection unit 64 are located on the left of the first joint surface 337 and second joint surface 338 of the case 33.

Furthermore, in this embodiment, the rotational axis of the rotator 632 and the rotational axis of the input structure 30 are located at mutually different positions in the direction perpendicular to the rightward/leftward direction. Thus, setting the rotational velocity of the rotator 632 at a value greater than the rotational velocity of the input structure 30 as is done in this embodiment allows the detection precision (resolution) of the rotation detection unit 63 to be improved with the number of magnetic poles provided for the detection target 630 reduced. Alternatively, the rotational velocity of the rotator 632 may be set a value less than the rotational velocity of the input structure 30. In that case, the detection precision of the rotation detection unit 63 may be improved by increasing the diameter of the detection target 630 and the number of magnetic poles provided for the detection target 630.

Also, the second member 412 including the rotational member (tooth portion 413) according to this embodiment and the rotator 632 interlocking with the second member 412 rotate along with the input shaft 35 even when the one-way clutch 46 does not allow the rotational power to be transmitted from the first output structure 31 to the input shaft 35. Thus, the rotational state of the input shaft 35 may be detected appropriately by having the detection unit 631 detect the rotational state of the rotator 632 that rotates while interlocking with the second member 412.

As shown in FIG. 3, a wall portion 3311 is provided as a partition between the detection target 630 and the coil 621 of the torque detection unit 62. The wall portion 3311 reduces the chances of the magnetic force applied by the magnets in the detection target 630 affecting the coil 621 of the torque detection unit 62. That is to say, this reduces the chances of the magnetic force of the magnets included in the detection target 630 causing a decline in the accuracy of a torque detection value obtained by the torque detection unit 62. The wall portion 3311 may either form an integral part of the first divided part 331 or be provided separately from the first divided part 331, whichever is appropriate. The wall portion 3311 is suitably made of a soft magnetic material such as iron. Using a soft magnetic material such as iron further reduces the chances of the magnetic force of the magnets included in the detection target 630 causing a decline in the accuracy of the torque detection value obtained by the torque detection unit 62.

The rotator 632 is arranged, when viewed generally perpendicularly to a plane covering the input shaft 35 and the motor shaft 54, on the same side as the motor shaft 54 with respect to the input shaft 35. Alternatively, the rotator 632 may be arranged, when viewed perpendicularly to the plane covering the input shaft 35 and the motor shaft 54, to overlap with the input shaft 35 at least partially. Arranging the rotator 632 at any of these positions allows the dimension of the motor unit 3 to be further reduced in the forward/backward direction. As used herein, the phrase "generally perpendicular" refers to not only a situation where two members intersect with each other exactly at right angles but also a situation where the two members intersect with each other to form an angle of 90 ± several degrees between themselves.

Meanwhile, the detection unit 631 is arranged, when viewed generally perpendicularly to the plane covering the input shaft 35 and the motor shaft 54, on the same side as the motor shaft 54 with respect to the input shaft 35. Alternatively, the detection unit 631 may be arranged to overlap with the input shaft 35 at least partially. Arranging the detection unit 631 at any of these positions allows the dimension of the motor unit 3 to be further reduced in the forward/backward direction.

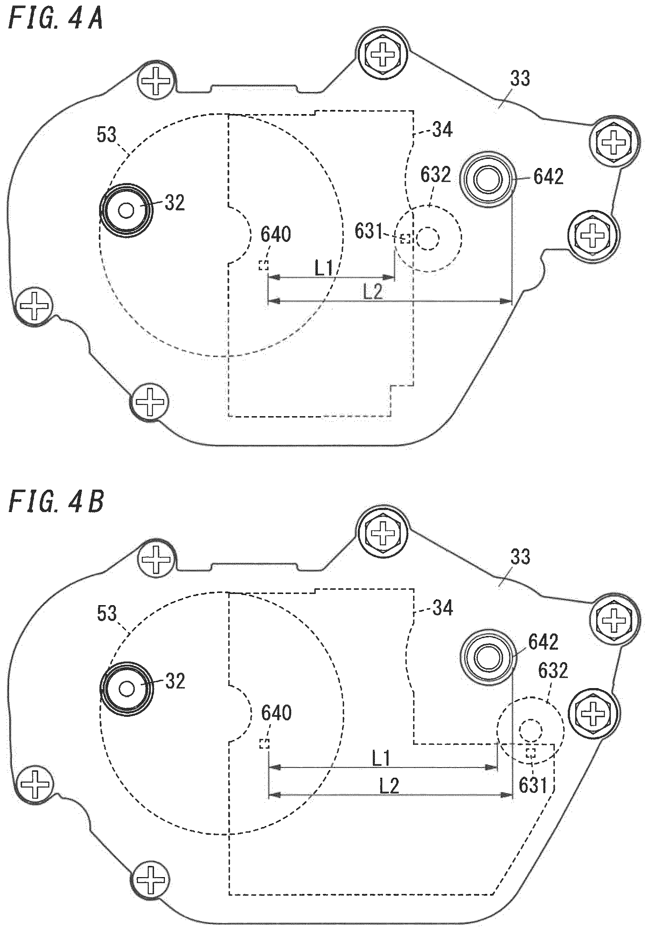

In this case, as measured in the forward/backward direction that is perpendicular to the rotational axis of the input shaft 35, a distance L1 from the rotator 632 (specifically, a point, closest to the motor rotation detection unit 640, on the rotator 632) to the motor rotation detection unit 640 is suitably equal to or less than a distance L2 from a point 642, most distant from the motor rotation detection unit 640, on the input shaft 35 to the motor rotation detection unit 640 as shown in FIGS. 4A and 4B. In this case, the dimension as measured in the forward/backward direction of the control board 34 may be decreased by shortening the distance between the motor rotation detection unit 640 and the detection unit 631 corresponding to the rotator 632. Note that the rotator 632 may be arranged behind the point 642 either entirely as shown in FIG. 4A or only partially as shown in FIG. 4B, whichever is appropriate.

### (Variations)

Next, variations of the exemplary embodiment described above will be enumerated one after another. In the following description of the first to third variations, any constituent element of each of these variations, having the same function as a counterpart of the first embodiment described above, will be designated by the same reference numeral as that counterpart's, and description thereof will be omitted herein.

### (First variation)

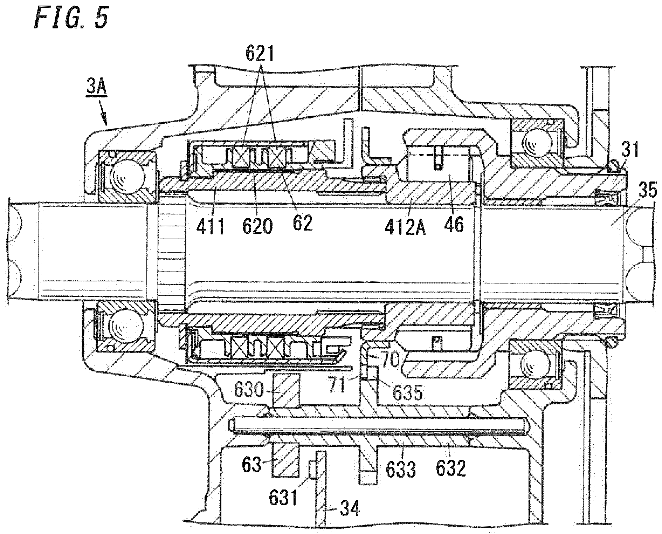

FIG. 5 illustrates a motor unit 3A according to a first variation. The motor unit 3A has the same configuration as the motor unit 3 (see FIG. 2) according to the exemplary embodiment described above except that the motor unit 3A includes a second member 412A instead of the second member 412 and a rotational member 70. The second member 412A has the same configuration as the second member 412 except that the second member 412A does not have the tooth portion 413 according to the exemplary embodiment described above.

The rotational member 70 is formed in the shape of a circular ring, which is concentric with the second member 412A. The rotational member 70 is provided on the outer periphery of a left end portion of the second member 412A. The rotational member 70 is fixed to the second member 412A and rotates, along with the second member 412A, around the right/left axis. On the outer peripheral surface of the rotational member 70, formed is a tooth portion 71 with a plurality of teeth.

The tooth portion 71 meshes with the tooth portion 635 of the rotator 632. This allows the body 633 (i.e., the rotator 632) to be coupled to the rotational member 70 and rotate while interlocking with the rotational member 70. That is to say, in this variation, the rotational member 70 constitutes a rotating portion that rotates along with the input shaft 35. The rotator 632 including the detection target 630 rotates while interlocking with the rotational member 70. The number of teeth of the tooth portion 635 is smaller than the number of teeth of the tooth portion 71.

In this variation, the rotational member 70 is fixed to the second member 412A. However, this is only an example and should not be construed as limiting. Alternatively, the rotational member 70 may also be coupled to the input shaft 35 either directly or indirectly. This configuration allows the rotational member 70 to rotate along with the input shaft 35.

### (Second variation)

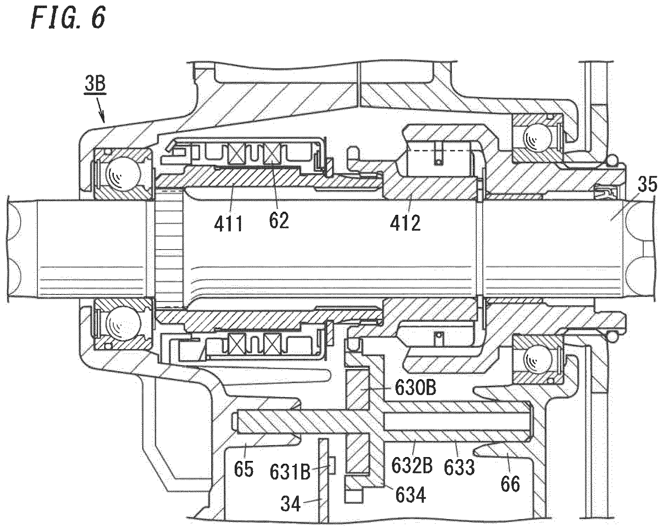

FIG. 6 illustrates a motor unit 3B according to a second variation. The motor unit 3B has the same configuration as the motor unit 3 (see FIG. 2) according to the exemplary embodiment described above except that the motor unit 3B includes a rotator 632B instead of the rotator 632 according to the exemplary embodiment and a detection unit 631B instead of the detection unit 631 according to the exemplary embodiment.

The rotator 632B has the same configuration as the rotator 632 according to the exemplary embodiment except that the rotator 632B includes a detection target 630B instead of the detection target 630 (see FIG. 2) according to the exemplary embodiment.

The detection target 630B is attached to the bulge portion 634 of the body 633. The detection target 630B rotates, along with the body 633, around the right/left axis. The detection target 630B may be implemented as either a magnet, which is magnetized such that the magnetic poles alternate along the circumference thereof or a member, in which a plurality of magnets are embedded such that the magnetic poles alternate along the circumference thereof. The detection target 630B is located on the right of the torque detection unit 62 and the control board 34. In addition, the detection target 630B overlaps with the second member 412 when viewed perpendicularly to the rightward/leftward direction.

The detection unit 631B has the same configuration as the detection unit 631 according to the exemplary embodiment except that the detection unit 631B is mounted on the right surface of the control board 34. That is to say, the detection unit 631B is mounted on a surface, different from the surface on which the motor rotation detection unit 640 (see FIG. 2) is mounted, of the control board 34. Optionally, the motor rotation detection unit 640 according to this variation may be mounted on the right surface of the control board 34.

### (Third variation)

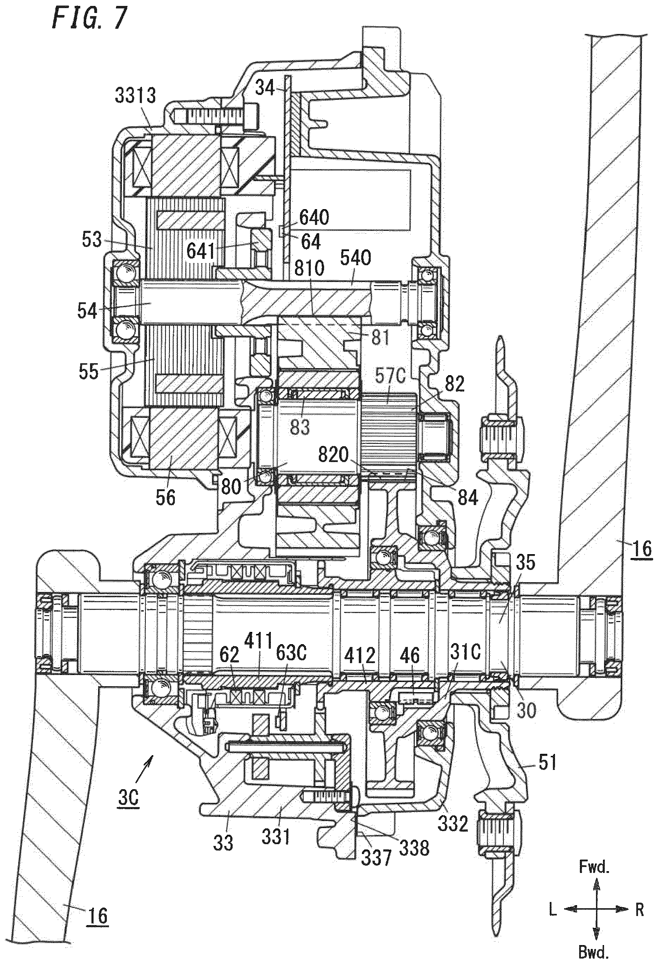

FIG. 7 illustrates a motor unit 3C according to a third variation. The motor unit 3C according to this variation is a uniaxial motor unit that does not include the second output structure 32 (see FIG. 2) according to the exemplary embodiment. Note that the motor unit 3C includes the same constituent elements as the motor unit 3 according to the exemplary embodiment. Thus, in the following description, any constituent element of the motor unit 3C, having the same function as a counterpart of the motor unit 3, will not be described all over again,

The motor unit 3C includes an output structure 31C instead of the first output structure 31. In this variation, the motor 53 is provided in a front part of the case 33 and the input structure 30 and the output structure 31C are provided in a rear end portion of the case 33.

The output structure 31C has the same configuration as the first output structure 31 except that the output structure 31C includes a tooth portion 84 with a plurality of teeth. The tooth portion 84 is provided on the outer peripheral surface of a left end portion of the output structure 31C and is located inside the case 33.

The motor unit 3C according to this variation includes a speed reducer mechanism 57C instead of the speed reducer mechanism 57 according to the exemplary embodiment. The speed reducer mechanism 57C is housed inside the case 33. The speed reducer mechanism 57C transmits the rotational power of the motor shaft 54 to the output structure 31C to make the rotational velocity of the output structure 31C lower than that of the motor shaft 54. The speed reducer mechanism 57C includes a transmission shaft 80, a one-way clutch 83, a first transmission gear 81, and a second transmission gear 82.

The transmission shaft 80 extends parallel to the rightward/leftward direction. The transmission shaft 80 is supported by either the case 33 or a bearing attached to the case 33 to be rotatable around the right/left axis. The one-way clutch 83 is provided on the outer periphery of the transmission shaft 80 and the first transmission gear 81 is provided on the outer periphery of the one-way clutch 83. That is to say, the one-way clutch 83 is located between the transmission shaft 80 and the first transmission gear 81.

The first transmission gear 81 is supported by the one-way clutch 83 to be rotatable around the right/left axis. The first transmission gear 81 includes a tooth portion 810 with a plurality of teeth. The tooth portion 810 is provided on the outer peripheral surface of the first transmission gear 81. The tooth portion 810 meshes with the tooth portion 540 of the motor shaft 54. This causes the first transmission gear 81 to rotate by the rotational power transmitted from the motor shaft 54. The number of teeth of the tooth portion 810 is larger than the number of teeth of the tooth portion 540.

The second transmission gear 82 is provided on the outer periphery of a region, located on the right of the one-way clutch 83 and the first transmission gear 81, of the transmission shaft 80. The second transmission gear 82 is fixed to the transmission shaft 80 and rotates, along with the transmission shaft 80, around the right/left axis. The second transmission gear 82 includes a tooth portion 820 with a plurality of teeth. The tooth portion 820 is provided on the outer peripheral surface of the second transmission gear 82.

The tooth portion 820 of the second transmission gear 82 meshes with the tooth portion 84 of the output structure 31E, thus allowing the rotational power of the first transmission gear 81 to be transmitted to the output structure 31E. The number of teeth of the tooth portion 820 of the second transmission gear 82 is smaller than the number of teeth of the tooth portion 810 of the first transmission gear 81.

The one-way clutch 83 may be implemented as, for example, a rachet one-way clutch. The one-way clutch 83 allows the rotational power to be transmitted from the first transmission gear 81 to the transmission shaft 80 only when the first transmission gear 81 rotates in one direction with respect to the transmission shaft 80.

Specifically, if the rotational velocity of the first transmission gear 81 is higher than the rotational velocity of the transmission shaft 80 while the rear wheel 11 (see FIG. 1) is turning in the forward direction, the one-way clutch 83 allows the rotational power to be transmitted from the first transmission gear 81 to the transmission shaft 80. That is to say, while the rear wheel 11 is turning in the forward direction, the one-way clutch 83 allows the rotational power to be transmitted only from the first transmission gear 81 to the transmission shaft 80, not from the transmission shaft 80 to the first transmission gear 81. This reduces, when the motor 53 stops running and the rider pumps the pedals 17 (see FIG. 1), for example, the chances of the motor shaft 54 and the rotor 55 rotating, thus reducing the pedaling force to be applied to turn the rear wheel 11, compared to a situation where the rotational power is transmitted from the transmission shaft 80 to the first transmission gear 81.

When the rotational power of the first transmission gear 81 is transmitted to the transmission shaft 80 via the one-way clutch 83, the rotational power of the motor shaft 54 is transmitted to the output structure 31C via the first transmission gear 81, the one-way clutch 83, the transmission shaft 80, and the second transmission gear 82. Thus, while the rider is pumping the pedals 17 (see FIG. 1) and the motor 53 is running, the resultant force, produced as the sum of the rotational power of the second member 412 rotating with the pedaling force applied thereto and the rotational power of the second transmission gear 82 driven in rotation by the motor 53, causes the output structure 31C to rotate. This rotational power of the output structure 31C allows the electric bicycle 1 to turn its wheels in the forward traveling direction.

The control board 34 overlaps with the first transmission gear 81 when viewed perpendicularly to the rightward/leftward direction. Note that the control board 34 may at least partially overlap with the first transmission gear 81 when viewed perpendicularly to the rightward/leftward direction. Providing the control board 34 at such a position allows the control board 34 to be brought closer to the torque detection unit 62 along the axis of the input shaft 35, thus enabling the torque detection unit 62 and the control board 34 to be interconnected with a shorter cable. Furthermore, a cable extension portion of the torque detection unit 62 is suitably arranged on the right (closer to the second divided part 332) along the axis of the input structure 30. This allows the torque detection unit 62 and the control board 34 to be interconnected with an even shorter cable.

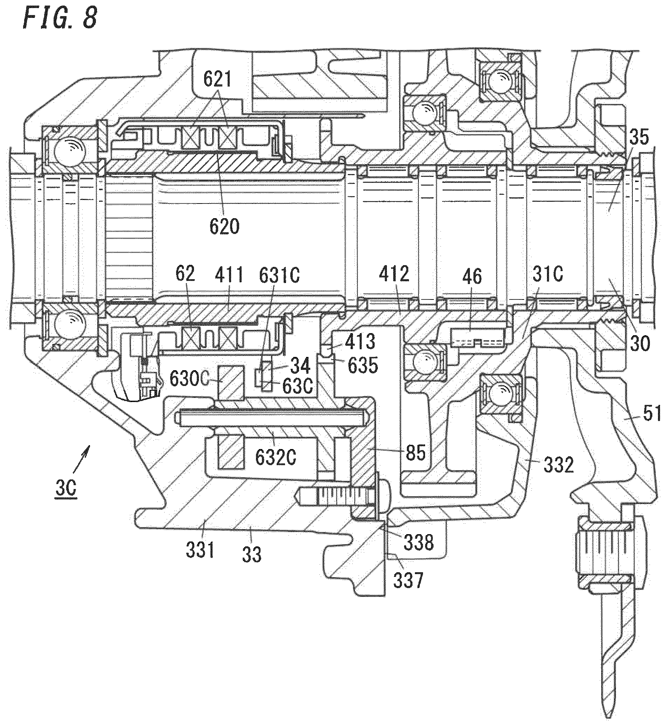

The motor unit 3C according to this variation includes a rotation detection unit 63C instead of the rotation detection unit 63 according to the first embodiment. As shown in FIG. 8, the rotation detection unit 63C includes: a rotator 632C including a detection target 630C; and a detection unit 631C. The detection target 630C, the rotator 632C, and the detection unit 631C may have the same configuration as the detection target 630, the rotator 632, and the detection unit 631, respectively, according to the first embodiment except that the rotator 632C according to this variation is located behind the input structure 30 and that a right end portion of the rotator 632C is supported by a supporting portion 85 attached to the case 33 to be rotatable around the right/left axis.

### (Other variations)

The motor units 3, 3A-3C and electric bicycles 1 according to the exemplary embodiment and its variations described above may have their design changed as appropriate.

For example, in the exemplary embodiment and the first and third variations described above, the detection target 630, 630C overlaps entirely with only a part of the torque detection unit 62. However, this is only an example of the present disclosure and should not be construed as limiting. Alternatively, only part of the detection target 630, 630C may overlap with part or all of the torque detection unit 62. Optionally, the detection target 630, 630C may overlap either entirely, or only partially, with the magnetostriction generating portion 620 or coil 621 of the torque detection unit 62 when viewed perpendicularly to the rightward/leftward direction.

Furthermore, the rotator 632, 632B, 632C may also be arranged at such a position where when measured perpendicularly to the rotational axis of the input shaft 35, the distance L1 from the rotator 632, 632B, 632C to the motor rotation detection unit 640 is longer than the distance L2 from a point 642, most distant from the motor rotation detection unit 640, on the input shaft 35 to the motor rotation detection unit 640.

Also, the rotation detection unit 63, 63C does not have to be implemented as a rotation detector including magnets and a hole IC. Alternatively, the rotation detection unit 63, 63C may also be implemented as an optical rotation detector. Furthermore, each of the detection unit 631, 631B, 631C and the motor rotation detection unit 640 does not have to be implemented as a hole IC but may also be a hole element or a magnetoresistance (MR) element, for example.

Optionally, the first member 411 may be located in its entirety on the left of the first joint surface 337 and the second joint surface 338. Furthermore, the rotator 641 (see FIG. 2) has only to be a member that rotates along with, or while interlocking with, the motor shaft 54. For example, the rotator 641 may also be a member that rotates while meshing with the motor shaft 54 or the rotor 55, for example. As used herein, if something "rotates along with" something else, then it means that these two things rotate around the same rotational axis. Also, if something "rotates while interlocking with" something else, then it means that these two things rotate around two different rotational axes. Furthermore, the case 33 may also be made of a non-metallic material. The material for the case 33 is not limited to any particular material.

Furthermore, the fitting portions 42, 43 do not have to be splines but may also be serrations, for example. Optionally, one of the fitting portions 42, 43 may be an external thread and the other fitting portion 42, 43 may be an internal thread. Likewise, the fitting portions 44, 45 do not have to be splines but may also be serrations, for example. Optionally, one of the fitting portions 44, 45 may be an external thread and the other fitting portion 44, 45 may be an internal thread.

Furthermore, each of the one-way clutches 46, 59, 83 may be implemented as a roller-type one-way clutch or a sprag-type one-way clutch, for example. Furthermore, each of the bearings 36, 37, 60, 61 does not have to be a ball bearing but may also be a roller bearing, for example.

Furthermore, the torque detection unit 62 does not have to be a magnetostrictive torque sensor but may also be a torque sensor that uses a potentiometer, for example. Optionally, the detection unit 631, 631C and the motor rotation detection unit 640 may be mounted on two different surfaces of the control board 34. Alternatively, the detection unit 631, 631B, 631C and the motor rotation detection unit 640 may be mounted on two different control boards.

Optionally, the power transmission unit for electric bicycles may also be a unit including no motor 53. In that case, the auxiliary driving force for the electric bicycle 1 may be generated by, for example, either a motor provided in the vicinity of the power transmission unit for electric bicycles or a hub motor for driving the front wheel of the electric bicycle. In the latter case, in particular, when the motor is running, the rotational power of the rear wheel 11 of the electric bicycle 1 traveling is transmitted to either the first output structure 31 or the output structure 31C via the power transmission medium 19.

### (Aspects)

As can be seen from the foregoing description of the exemplary embodiment and its variations, a power transmission unit for electric bicycles according to a first aspect has the following configuration. Specifically, the power transmission unit includes an input shaft (35), a transmission member (41), an output structure (31, 31C), a one-way clutch (46), a rotational member (tooth portion 413), a rotator (632, 632B, 632C), and a detection unit (631, 631B, 631C). The input shaft (35) is caused to rotate by external force transmitted thereto. The transmission member (41) is provided on an outer periphery of the input shaft (35) and coupled to, and rotates along with, the input shaft (35). The output structure (31, 31C) outputs rotational power of the transmission member (41). The one-way clutch (46) is arranged between the transmission member (41) and the output structure (31, 31C) and allows rotational power to be transmitted from the transmission member (41) to the output structure (31, 31C) only when the transmission member (41) rotates in one direction with respect to the output structure (31, 31C). The rotational member is coupled to either the transmission member (41) or the input shaft (35) and rotates along with the input shaft (35). The rotator (632, 632B, 632C) rotates while interlocking with the rotational member. The detection unit (631, 631B, 631C) detects a rotational state of the rotator (632, 632B, 632C). The rotational axis of the rotator (632, 632B, 632C) is located, in a direction perpendicular to an axis of the input shaft (35), at a different position from a rotational axis of the input shaft (35).

According to this aspect, the respective rotational axes of the rotator (632, 632B, 632C) and the input shaft (35) are arranged at different positions. This allows the rotational state detection accuracy of the input shaft (35) to be set freely and the degree of freedom in the arrangement position of the rotator (632, 632B, 632C) to be increased. For example, setting the rotational velocity of the rotator (632, 632B, 632C) at a value greater than the rotational velocity of the input shaft (35) allows the detection accuracy (resolution) of the detection unit (631, 631B, 631C) to be increased. In addition, even when the one-way clutch (46) does not allow the rotational power to be transmitted from the output structure (31, 31C) to the input shaft (35), the rotational member also rotates along with the input shaft (35). This allows the rotational state of the input shaft (35) to be detected appropriately by making the detection unit (631, 631B, 631C) detect the rotational state of the rotator (632, 632B, 632C) rotating along with the rotational member. In addition, the rotational axis of the rotator (632, 632B, 632C) is located, in a direction perpendicular to an axis of the input shaft (35), at a different position from a rotational axis of the input shaft (35). This allows the power transmission unit for electric bicycles to have its dimension reduced along the rotational axis of the input shaft (35).

The power transmission unit according to the first aspect has the following configuration. The power transmission unit further includes a motor (53) and a speed reducer mechanism (57). The speed reducer mechanism (57) transmits rotational power of a motor shaft (54) of the motor (53) to reduce a rotational velocity of the motor shaft (54). The speed reducer mechanism (57) includes a gear (58). The gear (58) rotates while interlocking with the motor shaft (54). The rotational axis of the rotator (632, 632B, 632C) is located, in the direction perpendicular to the axis of the input shaft (35), at a different position from a rotational axis of the gear (58).

This aspect allows the degree of freedom in the arrangement position of the rotator (632, 632B, 632C) to be increased in a power transmission unit for electric bicycles including the speed reducer mechanism (57).

A power transmission unit for electric bicycles according to a second aspect may be implemented in combination with the first aspect. The power transmission unit according to the second aspect has the following configuration. The power transmission unit further includes, separately from a first output structure (31) serving as the output structure (31), a second output structure (32). To the second output structure (32), rotational power of the motor (53) is output. The rotational velocity of the motor shaft (54) is reduced by the speed reducer mechanism (57) and the rotational power of the motor shaft (54) is output from the second output structure (32).

This aspect allows the second output structure (32) to be powered and driven in rotation by the motor (53), thus enabling rotational power to be output from the second output structure (32).

A power transmission unit for electric bicycles according to a third aspect may be implemented in combination with the first or second aspect. The rotational member according to the third aspect is coupled to the input shaft (35) and rotates along with the input shaft (35).

This aspect allows the rotational state of the input shaft (35) to be detected by using the rotational member that rotates along with the input shaft (35).

A power transmission unit for electric bicycles according to a fourth aspect may be implemented in combination with the first or second aspect. The fourth aspect has the following configuration. The rotational member is coupled to the transmission member (41) and rotates along with the input shaft (35).

This aspect allows the detection unit (631, 631B, 631C) for detecting the rotational state of the rotator (632, 632B, 632C) that rotates along with the rotational member coupled to the transmission member (41) to have increased detection accuracy.

A power transmission unit for electric bicycles according to a fifth aspect may be implemented in combination with any one of the first to fourth aspects. The fifth aspect has the following configuration. The power transmission unit further includes a torque detection unit (62). The torque detection unit (62) is provided on an outer periphery of the transmission member (41).

This aspect allows the torque of the input shaft (35) to be detected appropriately by making the torque detection unit (62) detect the torque of the transmission member (41).

A power transmission unit for electric bicycles according to a sixth aspect may be implemented in combination with the fifth aspect. The sixth aspect has the following configuration. The power transmission unit further includes a control board (34). The control board (34) controls rotation of the motor (53). A board surface of the control board (34) extends in a direction intersecting with the axis of the input shaft (35). The control board (34) overlaps with at least part of the torque detection unit (62) when viewed perpendicularly to the rotational axis of the input shaft (35).

This aspect allows the torque detection unit (62) and the control board (34) to be interconnected with a shorter cable. In addition, this aspect also allows the power transmission unit for electric bicycles including the control board (34) to have its dimension reduced along the rotational axis of the input shaft (35).

A power transmission unit for electric bicycles according to an seventh aspect may be implemented in combination with the fifth or sixth aspect. The seventh aspect has the following configuration. The transmission member (41) includes a first member (411) and a second member (412, 412A). The first member (411) is provided on the outer periphery of the input shaft (35), coupled to the input shaft (35), and rotates along with the input shaft (35). The second member (412, 412A) is provided on the outer periphery of the input shaft (35), arranged beside the first member (411) along the rotational axis of the input shaft (35), coupled to the first member (411), and rotates along with the first member (411). The one-way clutch (46) is located between the second member (412, 412A) and the output structure (31, 31C) and allows rotational power to be transmitted from the second member (412, 412A) to the output structure (31, 31C) only when the second member (412, 412A) rotates in the one direction with respect to the output structure (31, 31C). The second member (412, 412A) is the rotational member.

This aspect allows the torque of the input shaft (35) to be detected more appropriately by making the torque detection unit (62) detect the torque of the first member (411).

A power transmission unit for electric bicycles according to a eighth aspect may be implemented in combination with any one of the fifth to seventh aspects. The eighth aspect has the following configuration. The rotator (632, 632C) includes a detection target (630, 630B, 630C). The detection target (630, 630C) rotates while interlocking with the rotational member. The detection unit (631, 631B, 631C) detects a rotational state of the detection target (630, 630B, 630C). At least part of the torque detection unit (62) and at least part of the detection target (630, 630B, 630C) overlap with each other when viewed perpendicularly to the rotational axis of the input shaft (35).

This aspect allows the torque detection unit (62), detection target (630, 630B, 630C), and detection unit (631, 631B, 631C) to be arranged sufficiently close to each other along the rotational axis of the input shaft (35). This simplifies the interconnection pattern of the torque detection unit (62) and the detection unit (631, 631B, 631C), thus facilitating making effective use of the space inside the unit.

A power transmission unit for electric bicycles according to a ninth aspect may be implemented in combination with any one of the first to eighth aspects. The rotator (632, 632B) according to the ninth aspect is arranged, when viewed substantially perpendicularly to a plane covering the input shaft (35) and the motor shaft (54), on the same side as the motor shaft (54) with respect to the input shaft (35) or to overlap with the input shaft (35) at least partially.

According to this aspect, the rotator (632, 632B) is not arranged opposite from the motor shaft (54) with respect to the input shaft (35), thus reducing an increase in the dimension in the length direction, perpendicular to the input shaft (35), of the power transmission unit for electric bicycles.

A power transmission unit for electric bicycles according to a tenth aspect may be implemented in combination with any one of the first to ninth aspects. The tenth aspect has the following configuration. The detection unit (631, 631B) is arranged, when viewed generally perpendicularly to a plane covering the input shaft (35) and the motor shaft (54), on the same side as the motor shaft (54) with respect to the input shaft (35) or to overlap with the input shaft (35) at least partially.

According to this aspect, the detection unit (631, 631B) for detecting the rotation of the rotator (632, 632B) is not arranged opposite from the motor shaft (54) with respect to the rotational axis of the rotator (632, 632B), thus reducing an increase in the dimension in the length direction, perpendicular to the input shaft (35), of the power transmission unit for electric bicycles.

A power transmission unit for electric bicycles according to an eleventh aspect may be implemented in combination with any one of the first to tenth aspects. The power transmission unit according to the eleventh aspect has the following configuration. The power transmission unit further includes a control board (34) and a motor rotation detection unit (640). On the control board (34), the detection unit (631, 631B, 631C) is mounted. The motor rotation detection unit (640) is mounted on the control board (34) and detects a rotational state of the motor (53). As measured in a direction that is perpendicular to the rotational axis of the input shaft (35), a distance (L1) from the rotator (632, 632B, 632C) to the motor rotation detection unit (640) is equal to or less than a distance (L2) from a point (642), most distant from the motor rotation detection unit (640), on the input shaft (35) to the motor rotation detection unit (640).

This aspect allows the control board (34) to have a reduced size.

An electric bicycle (1) according to a twelfth aspect has the following configuration. Specifically, the electric bicycle (1) includes a wheel (11) and the power transmission unit for electric bicycles according to any one of the first to eleventh aspects . The power transmission unit outputs rotational power to the wheel (11). This aspect provides an electric bicycle (1) including the power transmission unit for electric bicycles according to any one of the first to eleventh aspects.

### Reference Signs List

- L1: Distance
- L2: Distance
- 1: Electric Bicycle
- 11: Wheel (Rear Wheel)
- 3: Power Transmission Unit for Electric Bicycles (Motor Unit)
- 30: Input Structure
- 31: Output Structure (First Output Structure)
- 31C: Output Structure
- 35: Input Shaft
- 40: Transmission Mechanism
- 41: Transmission Member
- 411: First Member
- 412, 412A: Second Member
- 46: One-Way Clutch
- 51: Sprocket (First Drive Sprocket)
- 53: Motor
- 62: Torque Detection Unit
- 630, 630C: Detection Target
- 631, 631B, 631C: Detection Unit
- 632, 632B, 632C: Rotator
- 640: Motor Rotation Detection Unit
- 642: Point

## Claims

1. A power transmission unit for use in electric bicycles, the power transmission unit comprising:
an input shaft (35) caused to rotate by external force transmitted thereto;
a transmission member (41) provided on an outer periphery of the input shaft (35) and coupled to, and configured to rotate along with, the input shaft (35);
an output structure (31, 31C) configured to output rotational power of the transmission member (41);
a one-way clutch (46);
a rotational member (413) coupled to either the transmission member (41) or the input shaft (35) and configured to rotate along with the input shaft (35);
a rotator (632, 623B, 632C) configured to rotate while interlocking with the rotational member (413); and
a detection unit (631, 631B, 631C) configured to detect a rotational state of the rotator (632, 623B, 632C),
a rotational axis of the rotator (632, 623B, 632C) being located, in a direction perpendicular to an axis of the input shaft (35) , at a different position from a rotational axis of the input shaft (35),
the power transmission unit further comprising:
a motor (53); and
a speed reducer mechanism (57) configured to transmit rotational power of a motor shaft (54) of the motor (53) to reduce a rotational velocity of the motor shaft (54), wh erei n
the speed reducer mechanism (57) includes a gear (58) configured to rotate while interlocking with the motor shaft (54), **characterised in that** the one-way clutch (38) is arranged between the transmission member and the output structure and configured to allow rotational power to be transmitted from the transmission member to the output structure only when the transmission member rotates in one direction with respect to the output structure; and
a rotational axis of the rotator (632, 623B, 632C) is located, in the direction perpendicular to the axis of the input shaft (35), at a different position from a rotational axis of the gear (58).

2. The power transmission unit of claim 1, further comprising, separately from a first output structure (31) serving as the output structure (31), a second output structure (32), to which rotational power of the motor (53) is output, wherein
the rotational velocity of the motor shaft (54) is reduced by the speed reducer mechanism (57) and the rotational power of the motor shaft (54) is output from the second output structure (32).

3. The power transmission unit of claim 1 or 2, wherein
the rotational member is coupled to the input shaft (35) and configured to rotate along with the input shaft (35).

4. The power transmission unit of claim 1 or 2, wherein
the rotational member is coupled to the transmission member (41) and configured to rotate along with the input shaft (35).

5. The power transmission unit of any one of claims 1 to 4, further comprising a torque detection unit (62) provided on an outer periphery of the transmission member (41).

6. The power transmission unit of claim 5, further comprising a control board (34) configured to control rotation of the motor (53), wherein
a board surface of the control board (34) extends in a direction intersecting with the axis of the input shaft (35), and
the control board (34) overlaps with at least part of the torque detection unit (62) when viewed perpendicularly to the rotational axis of the input shaft (35).

7. The power transmission unit of claim 5 or 6, wherein
the transmission member (41) includes:
a first member (411) provided on the outer periphery of the input shaft (35), coupled to the input shaft (35), and configured to rotate along with the input shaft (35); and
a second member (412, 412A) provided on the outer periphery of the input shaft (35) , arranged beside the first member (411) along the rotational axis of the input shaft (35), coupled to the first member (35), and configured to rotate along with the first member (411), and
the one-way clutch (46) is located between the second member (412, 412A) and the output structure (31, 31C) and configured to allow rotational power to be transmitted from the second member (412, 412A) to the output structure (31, 31C) only when the second member (412, 412A) rotates in the one direction with respect to the output structure (31, 31C),
the second member (412, 412A) is the rotational member, and
the torque detection unit (62) is arranged on an outer periphery of the first member 411).

8. The power transmission unit of any one of claims 5 to 7, wherein
the rotator (632, 632C) includes a detection target (630, 630B, 630C) configured to rotate while interlocking with the rotational member,
the detection unit (631, 631B, 631C) is configured to detect a rotational state of the detection target (630, 630B, 630C), and
at least part of the torque detection unit (62) and at least part of the detection target (630, 630B, 630C) overlap with each other when viewed perpendicularly to the rotational axis of the input shaft (35).

9. The power transmission unit of any one of claims 1 to 8, wherein
the rotator (632, 632B) is arranged, when viewed substantially perpendicularly to a plane covering the input shaft (35) and the motor shaft (54), on the same side as the motor shaft (54) with respect to the input shaft (35) or to overlap with the input shaft (35) at least partially.

10. The power transmission unit of any one of claims 1 to 9, wherein
the detection unit (631, 631B) is arranged, when viewed generally perpendicularly to a plane covering the input shaft (35) and the motor shaft (54) , on the same side as the motor shaft (54) with respect to the input shaft (35) or to overlap with the input shaft (35) at least partially.

11. The power transmission unit of any one of claims 1 to 10, further comprising:
a control board (34) on which the detection unit (631, 631B, 631C) is mounted; and
a motor rotation detection unit (640) mounted on the control board (34) and configured to detect a rotational state of the motor, wherein
as measured in a direction that is perpendicular to the rotational axis of the input shaft (35), a distance (L1) from the rotator (632, 632B, 632C) to the motor rotation detection unit (640) is equal to or less than a distance (L2) from a point (642), most distant from the motor rotation detection unit &40), on the input shaft (35) to the motor rotation detection unit (640).

12. An electric bicycle (1) comprising:
a wheel (11); and
the power transmission unit for electric bicycles according to any one of claims 1 to 11,
the power transmission unit for electric bicycles being configured to output rotational power to the wheel (11).

## Patentansprüche

1. Kraftübertragungseinheit zur Verwendung in Elektrofahrrädern, wobei die Kraftübertragungseinheit aufweist:
eine Eingangswelle (35), die durch daran übertragene externe Kraft zum Drehen gebracht wird;
ein Übertragungselement (41), das an einem Außenumfang der Eingangswelle (35) bereitgestellt und mit der Eingangswelle (35) gekoppelt und konfiguriert ist, sich einhergehend mit dieser zu drehen;
eine Ausgangsstruktur (31, 31C), die konfiguriert ist, Drehkraft des Übertragungselements (41) auszugeben;
eine Einwegkupplung (46);
ein Drehelement (413), das entweder mit dem Übertragungselement (41) oder mit der Eingangswelle (35) gekoppelt und konfiguriert ist, sich einhergehend mit der Eingangswelle (35) zu drehen;
eine Dreheinrichtung (632, 623B, 632C), die konfiguriert ist, sich zu drehen, während sie mit dem Drehelement (413) verriegelt ist; und
eine Detektionseinheit (631, 631B, 631C), die konfiguriert ist, einen Drehzustand der Dreheinrichtung (632, 623B, 632C) zu detektieren,
wobei sich eine Drehachse der Dreheinrichtung (632, 623B, 632C) in einer Richtung senkrecht zu einer Achse der Eingangswelle (35) an einer Position befindet, die sich von einer Drehachse der Eingangswelle (35) unterscheidet,
wobei die Kraftübertragungseinheit ferner aufweist:
einen Motor (53); und
einen Untersetzungsmechanismus (57), der konfiguriert ist, Drehkraft einer Motorwelle (54) des Motors (53) zu übertragen, um eine Drehgeschwindigkeit der Motorwelle (54) zu reduzieren,
wobei der Untersetzungsmechanismus (57) ein Zahnrad (58) aufweist, das konfiguriert ist, sich zu drehen, während es mit der Motorwelle (54) verriegelt ist,
**dadurch gekennzeichnet, dass** die Einwegkupplung (38) zwischen dem Übertragungselement und der Ausgangsstruktur angeordnet und konfiguriert ist, eine Übertragung von Drehkraft von dem Übertragungselement an die Ausgangsstruktur lediglich dann zu ermöglichen, wenn sich das Übertragungselement in einer ersten Richtung in Bezug auf die Ausgangsstruktur dreht; und
sich eine Drehachse der Dreheinrichtung (632, 623B, 632C) in der Richtung senkrecht zu der Achse der Eingangswelle (35) an einer Position befindet, die sich von einer Drehachse des Zahnrads (58) unterscheidet.

2. Kraftübertragungseinheit nach Anspruch 1, ferner aufweisend, getrennt von einer ersten Ausgangsstruktur (31), die als die Ausgangsstruktur (31) dient, eine zweite Ausgangsstruktur (32), an die Drehkraft des Motors (53) ausgegeben wird,
die Drehgeschwindigkeit der Motorwelle (54) durch den Untersetzungsmechanismus (57) reduziert wird und die Drehkraft der Motorwelle (54) von der zweiten Ausgangsstruktur (32) ausgegeben wird.

3. Kraftübertragungseinheit nach Anspruch 1 oder 2, wobei
das Drehelement mit der Eingangswelle (35) gekoppelt und konfiguriert ist, sich einhergehend mit der Eingangswelle (35) zu drehen.

4. Kraftübertragungseinheit nach Anspruch 1 oder 2, wobei
das Drehelement mit dem Übertragungselement (41) gekoppelt und konfiguriert ist, sich einhergehend mit der Eingangswelle (35) zu drehen.

5. Kraftübertragungseinheit nach einem der Ansprüche 1 bis 4, ferner aufweisend eine Drehmomentdetektionseinheit (62), die an einem Außenumfang des Übertragungselements (41) bereitgestellt ist.

6. Kraftübertragungseinheit nach Anspruch 5, ferner aufweisend eine Steuerplatine (34), die konfiguriert ist, eine Drehung des Motors (53) zu steuern, wobei
sich eine Platinenoberfläche der Steuerplatine (34) in einer Richtung erstreckt, welche die Achse der Eingangswelle (35) schneidet, und
die Steuerplatine (34) bei Betrachtung senkrecht zu der Drehachse der Eingangswelle (35) zumindest einen Teil der Drehmomentdetektionseinheit (62) überschneidet.

7. Kraftübertragungseinheit nach Anspruch 5 oder 6, wobei
das Übertragungselement (41) aufweist:
ein erstes Element (411), das an dem Außenumfang der Eingangswelle (35) bereitgestellt, mit der Eingangswelle (35) gekoppelt und konfiguriert ist, sich einhergehend mit der Eingangswelle (35) zu drehen; und
ein zweites Element (412, 412A), das an dem Außenumfang der Eingangswelle (35) bereitgestellt, neben dem ersten Element (411) entlang der Drehachse der Eingangswelle (35) angeordnet, mit dem ersten Element (411) gekoppelt und konfiguriert ist, sich einhergehend mit dem ersten Element (411) zu drehen, und
sich die Einwegkupplung (46) zwischen dem zweiten Element (412, 412A) und der Ausgangsstruktur (31, 31C) befindet und konfiguriert ist, eine Übertragung von Drehkraft von dem zweiten Element (412, 412A) an die Ausgangsstruktur (31, 31C) lediglich dann zu ermöglichen, wenn sich das zweite Element (412, 412A) in der einen Richtung in Bezug auf die Ausgangsstruktur (31, 31C) dreht,
das zweite Element (412, 412A) das Drehelement ist, und
die Drehmomentdetektionseinheit (62) an einem Außenumfang des ersten Elements (411) angeordnet ist.

8. Kraftübertragungseinheit nach einem der Ansprüche 5 bis 7, wobei
die Dreheinrichtung (632, 632C) ein Detektionsziel (630, 630B, 630C) aufweist, das konfiguriert ist, sich zu drehen, während es mit dem Drehelement verriegelt ist,
die Detektionseinheit (631, 631B, 631C) konfiguriert ist, einen Drehzustand des Detektionsziels (630, 630B, 630C) zu detektieren, und
sich bei Betrachtung senkrecht zu der Drehachse der Eingangswelle (35) zumindest ein Teil der Drehmomentdetektionseinheit (62) und zumindest ein Teil des Detektionsziels (630, 630B, 630C) überschneiden.

9. Kraftübertragungseinheit nach einem der Ansprüche 1 bis 8, wobei
die Dreheinrichtung (632, 632B) bei Betrachtung im Wesentlichen senkrecht zu einer Ebene, welche die Eingangswelle (35) und die Motorwelle (54) abdeckt, auf derselben Seite wie die Motorwelle (54) in Bezug auf die Eingangswelle (35) angeordnet ist oder angeordnet ist, um sich mit der Eingangswelle (35) zumindest teilweise zu überschneiden.

10. Kraftübertragungseinheit nach einem der Ansprüche 1 bis 9, wobei
die Detektionseinheit (631, 631B) bei Betrachtung im Allgemeinen senkrecht zu einer Ebene, welche die Eingangswelle (35) und die Motorwelle (54) abdeckt, auf derselben Seite wie die Motorwelle (54) in Bezug auf die Eingangswelle (35) angeordnet ist oder angeordnet ist, um sich mit der Eingangswelle (35) zumindest teilweise zu überschneiden.

11. Kraftübertragungseinheit nach einem der Ansprüche 1 bis 10, ferner aufweisend:
eine Steuerplatine (34), auf der die Detektionseinheit (631, 631B, 631C) montiert ist; und
eine Motordrehungsdetektionseinheit (640), die auf der Steuerplatine (34) montiert und konfiguriert ist, einen Drehzustand des Motors zu detektieren,
gemessen in einer Richtung, die senkrecht zu der Drehachse der Eingangswelle (35) verläuft, eine Distanz (L1) von der Dreheinrichtung (632, 632B, 632C) zu der Motordrehungsdetektionseinheit (640) gleich oder kleiner ist als eine Distanz (L2) von einem am weitesten von der Motordrehungsdetektionseinheit (640) entfernten Punkt (642) auf der Eingangswelle (35) zu der Motordrehungsdetektionseinheit (640).

12. Elektrofahrrad (1), aufweisend:
ein Rad (11); und
die Kraftübertragungseinheit für Elektrofahrräder nach einem der Ansprüche 1 bis 11,
wobei die Kraftübertragungseinheit für Elektrofahrräder konfiguriert ist, Drehkraft an das Rad (11) auszugeben.

## Revendications

1. Unité de transmission de puissance destinée à être utilisée dans des bicyclettes électriques, l'unité de transmission de puissance comprenant :
un arbre d'entrée (35) amené à tourner par une force externe transmise audit arbre ;
un élément de transmission (41) disposé sur une périphérie externe de l'arbre d'entrée (35), et accouplé à l'arbre d'entrée (35) et conçu pour tourner conjointement avec ledit arbre ;
une structure de sortie (31, 31C) conçue pour délivrer une puissance de rotation de l'élément de transmission (41) ;
un embrayage unidirectionnel (46) ;
un élément rotatif (413) accouplé soit à l'élément de transmission (41), soit à l'arbre d'entrée (35), et conçu pour tourner conjointement avec l'arbre d'entrée (35) ;
un rotateur (632, 623B, 632C) conçu pour tourner tout en étant verrouillé à l'élément rotatif (413) ; et
une unité de détection (631, 631B, 631C) conçue pour détecter un état de rotation du rotateur (632, 623B, 632C),
un axe de rotation du rotateur (632, 623B, 632C) étant situé, dans une direction perpendiculaire à un axe de l'arbre d'entrée (35), au niveau d'une position différente d'un axe de rotation de l'arbre d'entrée (35),
l'unité de transmission de puissance comprenant en outre :
un moteur (53) ; et
un mécanisme réducteur de vitesse (57) conçu pour transmettre la puissance de rotation d'un arbre (54) du moteur (53) afin de réduire une vitesse de rotation de l'arbre (54) du moteur,
le mécanisme réducteur de vitesse (57) comprenant un engrenage (58) conçu pour tourner tout en étant verrouillé à l'arbre (54) du moteur,
**caractérisée en ce que** l'embrayage unidirectionnel (38) est agencé entre l'élément de transmission et la structure de sortie, et conçu pour permettre la transmission de la puissance de rotation de l'élément de transmission à la structure de sortie uniquement lorsque l'élément de transmission tourne dans une première direction par rapport à la structure de sortie ; et
un axe de rotation du rotateur (632, 623B, 632C) est situé, dans la direction perpendiculaire à l'axe de l'arbre d'entrée (35), au niveau d'une position différente d'un axe de rotation de l'engrenage (58).

2. L'unité de transmission de puissance de la revendication 1, comprenant en outre, séparément d'une première structure de sortie (31) servant de structure de sortie (31), une seconde structure de sortie (32), à laquelle la puissance de rotation du moteur (53) est délivrée,
la vitesse de rotation de l'arbre (54) du moteur étant réduite par le mécanisme réducteur de vitesse (57), et la puissance de rotation de l'arbre (54) du moteur étant délivrée à partir de la seconde structure de sortie (32).

3. L'unité de transmission de puissance des revendications 1 ou 2, dans laquelle
l'élément de rotation est accouplé à l'arbre d'entrée (35) et conçu pour tourner conjointement avec l'arbre d'entrée (35).

4. L'unité de transmission de puissance des revendications 1 ou 2, dans laquelle
l'élément de rotation est accouplé à l'élément de transmission (41) et conçu pour tourner conjointement avec l'arbre d'entrée (35).

5. L'unité de transmission de puissance de l'une quelconque des revendications 1 à 4, comprenant en outre une unité de détection de couple (62) disposée sur une périphérie externe de l'élément de transmission (41).

6. L'unité de transmission de puissance de la revendication 5, comprenant en outre un tableau de commande (34) conçu pour commander la rotation du moteur (53),
une surface du tableau de commande (34) s'étendant dans une direction croisant l'axe de l'arbre d'entrée (35), et
le tableau de commande (34) chevauchant au moins une partie de l'unité de détection de couple (62), vu perpendiculairement à l'axe de rotation de l'arbre d'entrée (35).

7. L'unité de transmission de puissance des revendications 5 ou 6, dans laquelle
l'élément de transmission (41) comprend :
un premier élément (411) disposé sur la périphérie externe de l'arbre d'entrée (35), accouplé à l'arbre d'entrée (35), et conçu pour tourner conjointement avec l'arbre d'entrée (35) ; et
un second élément (412, 412A) disposé sur la périphérie externe de l'arbre d'entrée (35), agencé à côté du premier élément (411) le long de l'axe de rotation de l'arbre d'entrée (35), accouplé au premier élément (411), et conçu pour tourner conjointement avec le premier élément (411), et
l'embrayage unidirectionnel (46) est situé entre le second élément (412, 412A) et la structure de sortie (31, 31C) et conçu pour permettre la transmission de la puissance de rotation du second élément (412, 412A) à la structure de sortie (31, 31C) uniquement lorsque le second élément (412, 412A) tourne dans l'une direction par rapport à la structure de sortie (31, 31C),
le second élément (412, 412A) est l'élément de rotation, et
l'unité de détection de couple (62) est agencée sur une périphérie externe du premier élément (411).

8. L'unité de transmission de puissance de l'une quelconque des revendications 5 à 7, dans laquelle
le rotateur (632, 632C) comprend une cible de détection (630, 630B, 630C) conçue pour tourner tout en étant verrouillée à l'élément rotatif,
l'unité de détection (631, 631B, 631C) est conçue pour détecter un état de rotation de la cible de détection (630, 630B, 630C), et
au moins une partie de l'unité de détection de couple (62) et au moins une partie de la cible de détection (630, 630B, 630C) se chevauchent, vues perpendiculairement à l'axe de rotation de l'arbre d'entrée (35).

9. L'unité de transmission de puissance de l'une quelconque des revendications 1 à 8, dans laquelle
le rotateur (632, 632B) est agencé, vu sensiblement perpendiculairement à un plan couvrant l'arbre d'entrée (35) et l'arbre (54) du moteur, du même côté que l'arbre (54) du moteur par rapport à l'arbre d'entrée (35), ou de façon à chevaucher l'arbre d'entrée (35) au moins partiellement.

10. L'unité de transmission de puissance de l'une quelconque des revendications 1 à 9, dans laquelle
l'unité de détection (631, 631B) est agencée, vue généralement perpendiculairement à un plan couvrant l'arbre d'entrée (35) et l'arbre (54) du moteur, du même côté que l'arbre (54) du moteur par rapport à l'arbre d'entrée (35), ou de façon à chevaucher l'arbre d'entrée (35) au moins partiellement.

11. L'unité de transmission de puissance de l'une quelconque des revendications 1 à 10, comprenant en outre :
un tableau de commande (34) sur lequel l'unité de détection (631, 631B, 631C) est montée ; et
une unité (640) de détection de rotation du moteur montée sur le tableau de commande (34) et conçue pour détecter un état de rotation du moteur,
une distance (L1), telle que mesurée dans une direction perpendiculaire à l'axe de rotation de l'arbre d'entrée (35), du rotateur (632, 632B, 632C) à l'unité (640) de détection de rotation du moteur, étant égale ou inférieure à une distance (L2) d'un point (642) le plus éloigné de l'unité (640) de détection de rotation du moteur sur l'arbre d'entrée (35) à l'unité (640) de détection de rotation du moteur.

12. Bicyclette électrique (1) comprenant :
une roue (11) ; et
l'unité de transmission de puissance, destinée à des bicyclettes électriques, selon l'une quelconque des revendications 1 à 11,
l'unité de transmission de puissance, destinée à des bicyclettes électriques, étant conçue pour délivrer une puissance de rotation à la roue (11).
